# EUROPÄISCHE PATENTANMELDUNG

(11) **EP 0 543 078 A1**
(43) Veröffentlichungstag der Anmeldung: **26.05.1993**
(21) Anmeldenummer: 92109330.8
(22) Anmeldetag: 03.06.1992
(51) Int. Cl.: H04Q 7/04, H04M 1/72

(54) **Anrufverfahren für ein schnurloses Telefon**

(30) Priorität: 16.11.1991 DE 4137820
(71) Anmelder: ROBERT BOSCH GMBH, 70442 Stuttgart (DE)
(72) Erfinder: Hartmann, Jürgen, Dipl. Ing., W-3340 Wolfenbüttel (DE); Schröder, Heiner, Dipl. Ing., W-4800 Bielefeld 1 (DE)

(57) **Zusammenfassung**

Die Basisstation (BS) bei einem Anruf aus dem Telefonnetz (TN) sendet sofort an alle zu der Basisstation gehörenden Mobilstationen (MS) ein Anrufsignal. Diejenige Mobilstation (MS2), die das Anrufsignal als erste empfängt und durch ein Quittungssignal beantwortet, baut mit der Basisstation automatisch eine Funkverbindung auf.

## Beschreibung

Die Erfindung geht von einem Anrufverfahren nach dem Oberbegriff des Anspruchs 1 aus.

Es ist ein derartiges Anrufverfahren bekannt. Da bei dem bekannten Verfahren die postalischen Vorschriften, wie zum Beispiel die Belegungsprüfung, eingehalten und ein gleichzeitiges Senden der zu der Basisstation gehörenden Mobilstationen vermieden werden müssen, damit keine Interferenzstörungen auftreten, und da außerdem bei den Mobilstationen ein Stromspartakt vorgesehen ist, ist ein längerer zeitlicher Vorlauf erforderlich, bis die Funkverbindung zu der Basisstation hergestellt und die Synchronisierung auf den gemeinsamen Zeitrahmen erfolgt ist.

Der Erfindung liegt die Aufgabe zugrunde, ein Anrufverfahren nach dem Oberbegriff des Anspruchs 1 derart weiterzubilden, daß nach einem Anruf aus dem Telefonnetz ohne Verzögerung eine Funkverbindung zwischen der Basisstation und den Mobilstationen aufgebaut wird.

Diese Aufgabe wird durch die in dem Anspruch 1 aufgeführten Merkmale gelöst. Mit dem erfindungsgemäßen schnurlosen Telefon ist der Vorteil verbunden, daß nach einem Anruf so schnell wie möglich ein Funkkanal belegt wird und eine Synchronisierung auf den gemeinsamen Zeitrahmen stattfindet.

Vorteilhafte Weiterbildungen der Erfindung ergeben sich aus den Unteransprüchen. Besonders vorteilhaft ist ein schnurloses Telefon mit den Merkmalen des Anspruchs 2; denn dadurch ergibt sich eine erhebliche Zeitersparnis.

Ein Ausführungsbeispiel der Erfindung ist in der Zeichnung an Hand mehrerer Figuren dargestellt und wird im folgenden näher erläutert. Es zeigen
- Fig. 1: ein Blockschaltbild eines bekannten Telefonnetzes mit einem schnurlosen Telefon, zu dem mehrere Mobilstationen gehören, und
- Fig. 2 - 6: fünf aufeinanderfolgende Zeitabschnitte der in der Basisstation und in den Mobilstationen ablaufenden Prozesse.

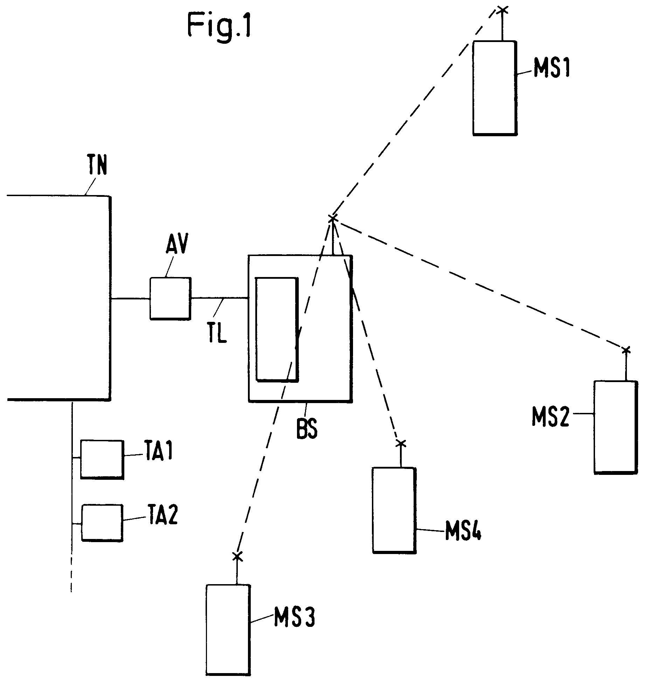

In Fig. 1 bezeichnet TN ein Telefonnetz, das ist zum Beispiel ein öffentliches Telefonnetz, mit mehreren Telefonen, von denen in Fig. 1 nur zwei Telefone TA1 und TA2 gezeigt sind. Mit dem Telefonnetz TN ist über eine Anschlußvorrichtung AV und eine Telefonleitung TL eine Basisstation BS eines schnurlosen Telefons verbunden, zu der mehrere Mobilstationen, zum Beispiel vier Mobilstationen MS1 bis MS4, gehören.

Die Wirkungsweise des vorstehend beschriebenen Netzes ist folgende.

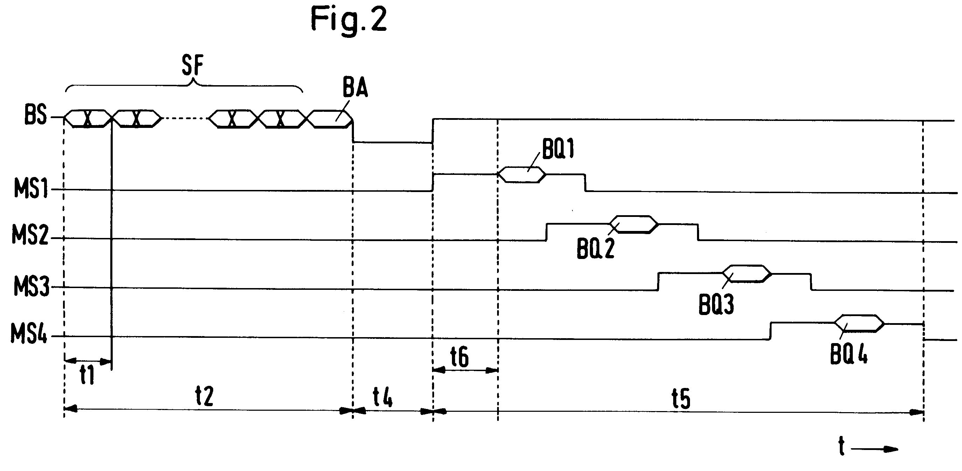

Hat die Basisstation BS auf der Telefonleitung TL einen zum Beispiel von dem Telefon TA1 ausgehenden Anruf erkannt, so sendet sie in einem Zeitabschnitt t2 (Fig. 2) eine Systemkennungsfolge SF aus mehreren Kennungen X an alle zu der Basisstation BS gehörenden Mobilstationen MS1 bis MS4 auf einem vorher empfangsseitig freigeprüften Funkkanal aus. Die Systemkennungsfolge SF bewirkt in den mobilen Stationen, die sich in dem Empfangsintervall befinden, eine Empfangsaktivierung, das heißt die Mobilstationen rasten auf diesen Kanal ein und warten auf weitere Informationen. Die Systemkennungen X weisen je eine Dauer von t1 auf. Der Zeitabschnitt t2 entspricht der Dauer des Scanning-Abstandes in den Mobilstationen. Um eine längere Batteriestandzeit zu erhalten, unterbindet der Scanning-Abstand temporär den Empfang und die Kanalprüfung in den Mobilstationen MS1 bis MS4. Die Basisstation BS erwartet während dieser Zeit keine Antwort und fordert die Mobilstationen durch anschließendes Senden einer Belegungsprüfungsanforderung BA (Fig. 2) dazu auf, in einem Zeitabschnitt t4 eine Belegungsprüfung des korrespondierenden Teils des Duplexkanals durchzuführen, deren Ergebnis durch zeitlich aufeinanderfolgende individuelle Quittungen BQ1 bis BQ4 der einzelnen Mobilstationen MS1 bis MS4 beantwortet wird. Dieses Verfahren setzt voraus, daß die Basisstation BS in dem Zeitabschnitt t4 den Sendekanal verläßt. Der Zeitabschnitt t6 entspricht der Senderhochlaufverzögerung in der Mobilstation MS1 und der Zeitabschnitt t5 dem Kanalbelegungstiming.

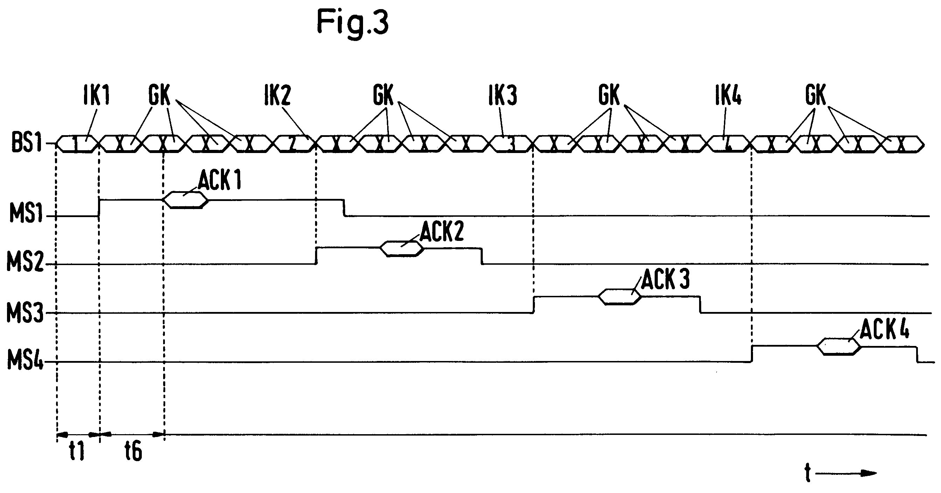

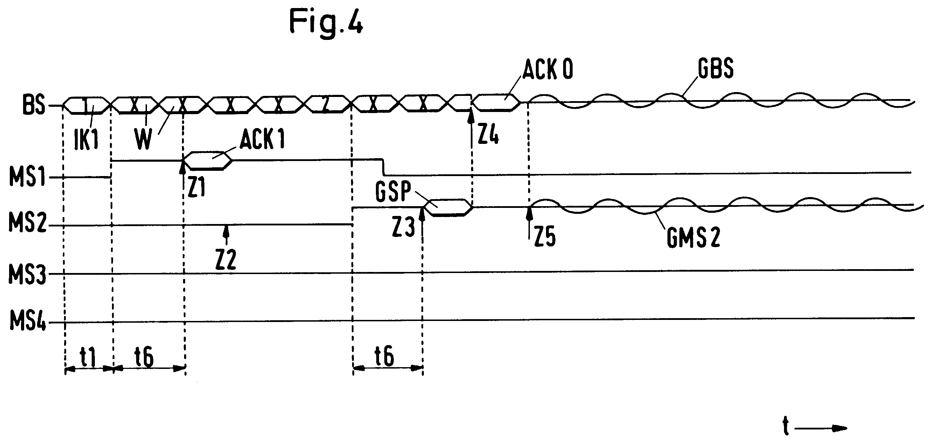

Um ein gleichzeitiges Belegen des Sendekanals einer Mobilstation durch mehrere Mobilstationen zu verhindern, sendet die Basisstation BS anschließend in einem sequentiellen Wechsel Individualkennungen IK1, IK2 ... und Globalkennungen GK (Fig. 3) an die zu der Basisstation BS gehörenden Mobilstationen MS1 bis MS4, die nur in dem jeweiligen Zeitschlitz nach der empfangenen Individualkennung von der entsprechenden Mobilstation durch eine individuelle Quittung ACK1, ACK2 ... (Fig. 3) beantwortet werden können. Der Zeitabschnitt t6 in den Fig. 3 und 4 entspricht der Senderhochlaufzeit in den Mobilstationen MS1 und MS2. Die Globalkennungen GK dienen dazu, die aktiven Mobilstationen im Empfangszustand auf diesem Kanal zu halten, bis ihre Individualkennung IK gesendet wird. Angesprochen werden durch dieses Prinzip nur die Mobilstationen MS, die in der ersten Kennungssendefolge auf die Belegungsprüfung positiv reagiert haben. Alle anderen Mobilstationen werden durch ein nachträgliches Adressieren in diese Sendesequenz eingebunden. Hierzu werden in einem relativ zur Dauer t1 einer Individualkennung großen zeitlichen Abstand die fehlenden Mobilstationen angesprochen, um sie hierdurch in die Sendesequenz schrittweise mit einzubauen; vgl. Fig. 4. Diese zweite Folge von Kennungen beinhaltet außer der individuellen Kennung, zum Beispiel IK1, der anzusprechenden Mobilstation, zum Beispiel MS1, eine Weckerinformation W, welche aus dem Ruftakt der Fernmeldeleitung FL abgeleitet wird und die Mobilstationen veranlaßt, den Ruf akustisch und synchron zum Ruftakt wiederzugeben. In diesem Zustand der kontinuierlichen Ruf-Signalisierung (vgl. Fig. 4) kann der Benutzer einer Mobilstation, zum Beispiel MS2, durch Betätigen einer Gesprächstaste beispielsweise zu einem Zeitpunkt Z2 seine Mobilstation zum Senden eines Gesprächskodes GSP veranlassen. Mit diesem Gesprächskode übermittelt die Mobilstation ihren Gesprächswunsch in dem entsprechenden Zeitschlitz zu einem Zeitpunkt Z3. Die Basisstation beantwortet den Gesprächswunsch durch Übertragung einer Quittung ACK0 zu einem Zeitpunkt Z4. Nach dem positiven Quittieren der Basisstation BS schalten die Basisstation und die Mobilstation MS2 ihren Sende- und Empfangskanal für die NF-Übertragung, das heißt für das Gespräch, frei; vgl. Zeitpunkt Z5, GBS und GMS2.

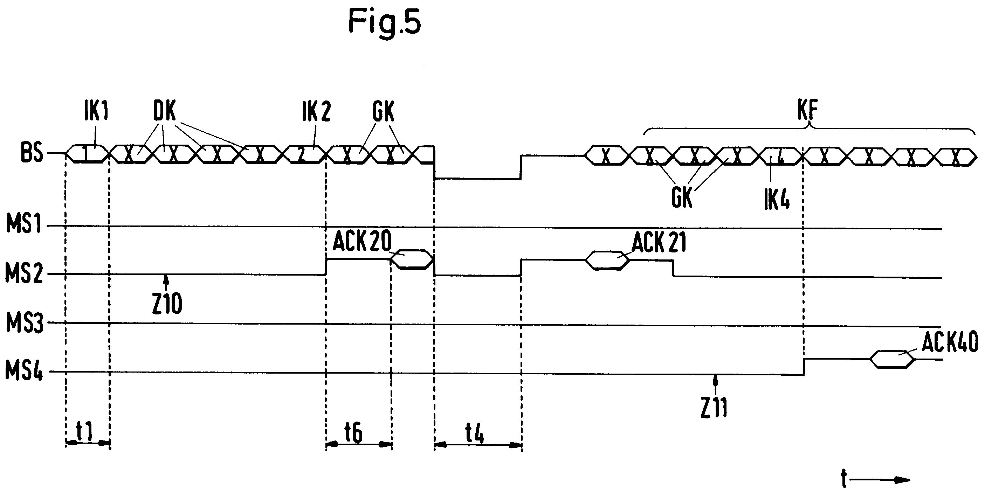

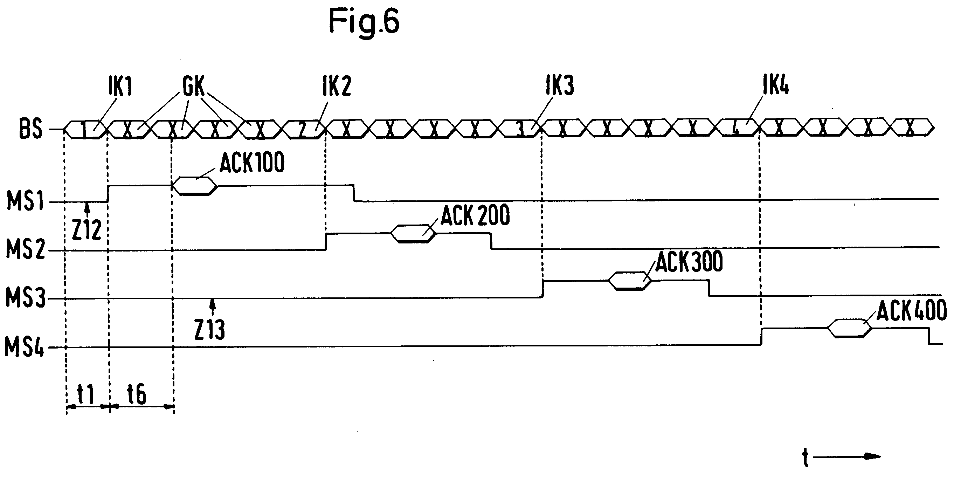

Abweichend von dem vorstehend beschriebenen bekannten Anrufverfahren läuft das im folgenden an Hand der Fig. 5 und 6 beschriebene neue Verfahren folgendermaßen ab.

Nach der Freiprüfung des Empfangsträgers des zu belegenden Kanals sendet die Basisstation BS nach dem Erkennen des über die Telefonleitung TL (Fig. 1) ankommenden Rufsignals eine Kennungsfolge (Fig. 5) aus Individualkennungen IK1, IK2 ... sowie eingeschobenen Globalkennungen GK aus. Letztere werden von aktiven Mobilstationen empfangen und halten sie in einem Zustand, in dem sie in den Kanal horchen, bis sie ihre Individualkennung empfangen, um ein gleichzeitiges Sendereinschalten bei mehreren Mobilstationen zu vermeiden. Da die Mobilstationen durch das angesprochene Stromsparverhalten nur jeweils für einige Sekunden empfangsbereit sind, sendet die Basisstation BS durch die jeweiligen Individualkennungen IK1, 1K2 solange eine Belegungsprüfungsaufforderung (Fig. 5), bis die erste Mobilstation, zum Beispiel die Mobilstation MS2, zu einem Zeitpunkt Z10 aktiv wird und diese empfängt. Die aufgerufene Mobilstation, zum Beispiel MS2, quittiert die Aufforderung mit einer korrespondierenden Bestätigung ACK20, worauf die Basisstation BS den Kanal für eine Zeitdauer t4 verläßt und die Mobilstation MS2 die einseitige Kanalbelegungsprüfung durchführt. Fällt die Prüfung positiv aus, dann bestätigt die Mobilstation MS2 dieses mit einer Kanalbelegungsquittung ACK21.

Nachdem der Kanalbelegungszustand der Basisstation BS bekannt ist, geht sie dazu über, den Rufstatus in allen Kennungsformen KF, das heißt als Globalkennungen GK und Individualkennungen, zum Beispiel IK4, zu übertragen; vgl. Fig. 5. Aktive bzw. empfangsbereite Mobilstationen, wie zum Beispiel die Mobilstation MS4 zu einem Zeitpunkt Z11, quittieren nur die Individualkennungen, zum Beispiel IK4, durch ein Quittungssignal, zum Beispiel ACK40, durch das diese Mobilstation in der Basisstation BS registriert wird. Mobilstationen, die die Rufsignale der Basisstation BS gegebenenfalls nicht mit einer vorgegebenen Mindestfeldstärke oder nur gestört empfangen, senden an die Basisstation BS ein Negativ-Quittungssignal aus. Die Basisstation registriert dann diese Mobilstationen als nicht erreichbar.

Da die Basisstation BS vom ersten Moment der Ruferkennung an eine sofortige Kanalbelegung durch eine Mobilstation anstrebt, verkürzt sich die wahrscheinliche Zeit bis zur ersten Rufsignalisierung auf einen Zeitraum von unter einer Sekunde, wenn man davon ausgeht, daß der Versatz zwischen der Aktivierung der Empfangsbereitschaft der einzelnen Mobilstationen zufällig entsteht. Im Vergleich zu dem Standardsystem wird außerdem der Sendeträger zu einem hohen Prozentsatz physikalisch belegt und unterbindet somit Versuche anderer Basisstationen, diesen Kanal zu belegen. In dem Zustand der Rufsignalisierung werden weiterhin alle zu der Basisstation BS gehörenden Mobilstationen MS1 bis MS4 angesprochen, die daraufhin schrittweise, zum Beispiel zu den Zeitpunkten Z12, Z13 (Fig. 6), aktiv werden und ohne erneute Belegungsprüfung den Rhythmus der Rufsignalisierung übernehmen sowie ihre Individualkennungen IK1 bis IK4 durch Individualkennungsbestätigung ACK100 bis ACK400 quittieren. Somit wird zu einem frühen Zeitpunkt ein Zustand erreicht, der bei dem bekannten Anrufverfahren gemäß den Fig. 1 bis 4 erst nach einer längeren Zeitspanne von zum Beispiel vier Sekunden besteht. Das aufwendige nachträgliche Einbinden der bei dem bekannten Anrufverfahren in den ersten vier Sekunden nicht ansprechbaren Mobilstationen erübrigt sich, da in der Rufsequenz-Kennungsfolge immer alle zu der Basisstation BS gehörenden Mobilstationen MS1 bis MS4 mit einbezogen werden und infolgedessen ebenfalls die Rufsignalisierung übernehmen. Der Verbindungsaufbau bis zum Gespräch wird dann in gleicher Weise realisiert wie bei dem bekannten Anrufverfahren gemäß Fig. 4.

## Patentansprüche

1. Anrufverfahren für ein schnurloses Telefon, das aus einer mit einem Telefonnetz verbundenen Basisstation und mehreren Mobilstationen besteht, die von der Basisstation gleichzeitig oder einzeln angerufen werden und die bei Empfangsbereitschaft ihre Empfangsteile zum Batteriesparen nur in bestimmten Zeitintervallen einschalten, **dadurch gekennzeichnet**, daß die Basisstation (BS) bei einem Anruf aus dem Telefonnetz (TN) alle in der Basisstation registrierten Mobilstationen (MS) durch ein Anrufsignal synchron ruft und daß diejenige Mobilstation (MS2), die das Anrufsignal als erste empfängt und durch ein Quittungssignal (ACK20) beantwortet, mit der Basisstation automatisch eine Funkverbindung aufbaut.

2. Anrufverfahren nach Anspruch 1, dadurch gekennzeichnet, daß die als erste quittierende Mobilstation (MS2) unmittelbar nach der Abgabe des Quittungssignals (ASCK20) eine Prüfung der Kanalbelegung innerhalb einer Sendepause (t4) der Basisstation (BS) vornimmt.

3. Anrufverfahren nach Anspruch 1 oder 2, dadurch gekennzeichnet, daß die Basisstation (BS) an die zweite Mobilstation und gegebenenfalls weitere Mobilstationen (MS4) nach der Kanalbelegung durch die erste Mobilstation (MS2) weiterhin Rufsignale übermittelt, die diese sofort nach Empfang durch ein Quittungssignal (ACK40) quittieren, das in der Basisstation (BS) registriert wird.

4. Anrufverfahren nach einem der Ansprüche 1 bis 3, dadurch gekennzeichnet, daß die Basisstation (BS) nach der Kanalbelegung durch die erste Mobilstation (MS1) Kodefolgen (KF) zum Ein- und Ausschalten des Weckersignals für die Mobilstationen (MS) sendet, die in allen durch die Basisstation registrierten Mobilstationen synchrone Weckersignale aus löst.

5. Anrufverfahren nach einem der Ansprüche 1 bis 4, dadurch gekennzeichnet, daß Mobilstationen (MS), die die Rufsignale der Basisstation (BS) zwar empfangen, aber wegen einer Unterschreitung der Mindestfeldstärke oder wegen anderer Störungen keine Funkverbindung zur Basisstation aufbauen können, ein Negativ-Quittungssignal aussenden, worauf die Basisstation diese Mobilstationen im Register als nicht erreichbar einträgt.
